# EUROPEAN PATENT SPECIFICATION

(11) **EP 4 526 276 B1**
(45) Date of publication and mention of the grant of the patent: **30.07.2025**
(21) Application number: 24723452.9
(22) Date of filing: 14.03.2024
(51) Int. Cl.: C05F 9/04, C05F 11/02, C05F 11/08

(54) **A FERTILISER COMPOSITION BASED ON A BIOTISED, SEWAGE SLUDGE PYROLYSIS PRODUCT**
DÜNGEMITTELZUSAMMENSETZUNG AUF BASIS EINES BIOTISIERTEN KLÄRSCHLAMMPYROLYSEPRODUKTS
COMPOSITION D'ENGRAIS À BASE D'UN PRODUIT BIOTISÉ DE PYROLYSE DE BOUES D'ÉPURATION

(30) Priority: 14.03.2023 CZ 20230100
(43) Date of publication of application: 26.03.2025
(73) Proprietor: Groown s.r.o., 25163 Strancice (CZ)
(72) Inventor: HAUSENBLAS, Michal, 25168 Kamenice (CZ); FUKA, Jaroslav, 25001 Brandýs nad Labem (CZ)
(74) Representative: Kendereski, Dusan
(86) International application number: PCT/CZ2024/050014
(87) International publication number: WO 2024/188381

(56) References cited:
- WO-A2-2012/170231
- CZ-U1- 34 889
- US-B1- 8 236 085
- TINGTING QIAN: "Transformation of phosphorus in sewage sludge biochar mediated by a phosphate-solubilizing microorganism", CHEMICAL ENGENEERING JOURNAL, vol. 359, 1 March 2019 (2019-03-01), AMSTERDAM, NL, pages 1573 - 1580, XP093162087, ISSN: 1385-8947, DOI: 10.1016/j.cej.2018.11.015
- YANG LU ET AL: "Effects of biochar addition on the abundance, speciation, availability, and leaching loss of soil phosphorus", SCIENCE OF THE TOTAL ENVIRONMENT, ELSEVIER, AMSTERDAM, NL, vol. 758, 20 November 2020 (2020-11-20), XP086435628, ISSN: 0048-9697, [retrieved on 20201120], DOI: 10.1016/J.SCITOTENV.2020.143657
- FASUSI OLUWASEUN ADEYINKA ET AL: "Agricultural Sustainability: Microbial Biofertilizers in Rhizosphere Management", AGRICULTURE, vol. 11, no. 2, 17 February 2021 (2021-02-17), pages 163, XP055869161, DOI: 10.3390/agriculture11020163

## Description

### Field of technology

The present invention relates to a fertiliser composition based on a product obtained at least partially by sewage sludge pyrolysis, wherein said product is biotised and enriched with organic components.

### Prior art

Biochar refers to charred biomass produced by pyrolysis. It is used, inter alia, as a fertiliser or soil conditioner to improve soil properties and natural soil fertility. Biochar is usually obtained by thermal reduction (pyrolysis) of biomass or other organic matter at temperatures between 450 and 800 °C. Its composition and properties depend on the material from which it is made. If it is derived from plant or animal biomass, it usually comprises between 50 and 90 % by weight of stable carbon and, in addition to carbon, usually about 1 % by weight of phosphorus, 2 % by weight of potassium, 6 % by weight of calcium and 1.5 % by weight of magnesium.

Sewage or waste sludge means the solid or semi-solid waste product of sewage treatment plants. The pyrolysis of this sludge can produce a biochar-like product, e. g. by the technology of PYREG GmbH and HST Hydrosystémy s.r.o. (available on 14 March 2023 at http://www.hydrosystemy.cz/produkty/53-nakladani-s-kaly/55-zpracovani-kalu-pyrolyzou/67-pyrolyzni-modul-pyreg and at http://www.hydrosystemy.cz/files/files/2eu7ifoi_files/Zpracovan%C3%AD%20Cist%C3% ADrenského%20kalu.pdf), wherein the sludge is first gasified at a temperature of 550 °C to 600 °C and then carbonised by the supply of a controlled amount of air. The material is moved inside the reactor by a screw conveyor. The resulting product with a high phosphorus content is characterised by its granular composition and can be used as a soil additive to promote the formation of organic matter, which is a source of nutrients in soil substrates, leading to an increase in soil quality and productivity. The terms "biochar", "product obtained by sewage sludge pyrolysis" and "sewage sludge pyrolysis product" are used interchangeably for the purposes of the present invention.

Fertiliser compositions comprising biochar obtained from sewage sludge pyrolysis and biotised by *Pseudomonas putida* and generally described spores of mycorrhizal fungi are known from, for example, US 10233131 B2, EP 2834322 A4, US 20190202749 A1 and US 10947167 B2. The biotisation of the above biochar using only *Pseudomonas putida* is described in a series of publications by Qian et al. in 2019, 2020 and 2022. The disadvantage of these compositions is the absence of mycorrhizal fungi beneficial to plants, plant growth promoting bacteria and nitrogen fixing bacteria, thus it is not a full biofertiliser comprising sufficient amounts of macronutrients without additional supplementation with inorganic fertilisers.

Fertiliser compositions comprising biochar obtained by sewage sludge pyrolysis and biotised by *Bacillus megatherium, Azotobacter spp.* and other species, and optionally by spores of endomycorrhizal fungi are known from, e. g., EP 2718246 A4, CN 113880651 A, CN 111763118 A. In addition, the biotisation of said biochar by *Bacillus megatherium* alone is described in CN 104628484 B, CN 105777372 B, CN 112808234 A. The disadvantage of these compositions is the absence of phosphate solubilising bacteria, so it is not a complete biofertiliser comprising sufficient macronutrients without additional supplementation with inorganic fertilisers.

Czech utility model CZ 34889 U1 describes a microgranulated fertiliser comprising, in a first example, biochar obtained by pyrolysis of soft wood at 650 °C and enriched with ammonium phosphate and, in a second example, biochar obtained by pyrolysis of cereal straw at 450 °C and enriched with calcium phosphate. The disadvantage of this composition is that in both cases, the biochar has to be enriched with phosphate (such as with ammonium or calcium phosphate according to examples of said document), and also the microgranulated composition is only achieved by using a binder comprising starch, and optionally urea.

Czech patent application CZ 20210592 A3 (not published at the priority date) describes a granular soil conditioner based on a mixture of organic fertiliser (e. g. animal excrement) and biotised biochar obtained by thermal reduction of plant biomass or animal bones, e. g. by thermal reduction of soft wood at 550 °C. Biotisation is achieved by soil bacteria of the genus *Pseudomonas* and/or *Bacillus,* nitrifying bacteria of the genus *Rhizobium* and/or *Azotobacter* or *Azospirillum,* and spores of arbuscular mycorrhizal fungi (e. g. *Glomus* genus) and/or ectomycorrhizal fungi (e. g. *Pisolithus, Scleroderma* or *Rhizopogon* genus) and/or mycoparasitic fungi (e. g. *Trichoderma* or *Pythium* genus) and/or ericoid mycorrhizal fungi. The granular composition is achieved using a starch-comprising binder. The soil conditioner may further comprise vermicompost extract or ammonium phosphate.

International patent application WO 2012170231 A2 discloses a fertiliser composition comprising a product obtained at least partially by sewage sludge pyrolysis (such as municipal waste including sewage waste), a phosphate solubilising bacterium *Pseudomonas aureofaceans,* spores of arbuscular mycorrhizal fungi *Glomus deserticola, Glomus intraradices* and *Glomus mosseae,* and a compost extract being a fertilising component. A method of producing said fertiliser composition is also disclosed, essentially comprising the steps of pyrolysing sewage sludge to form a sewage sludge pyrolysis product; mixing (and implicitly cooling) the resulting sewage sludge pyrolysis product with the fertilising component and drying the sewage sludge pyrolysis product; and biotising of the dried sewage sludge pyrolysis product with (among others) spores of arbuscular mycorrhizal fungi *Glomus deserticola, Glomus intraradices* and *Glomus mosseae;* and a phosphate solubilising bacterium *Pseudomonas aureofaciens.*

US patent US 8236085 B1 discloses a composition comprising: biochar; compost leachate or algae extract; endomycorrhizal fungi (such as *Glomus intraradices, Glomus mosseae, Glomus deserticola),* ectomycorrhizal fungi, *Trichoderma* (such as *T. harzianum),* bacteria such as *Bacillus megatherium, Azotobacter, Pseudomonas,* including a phosphate solubilising bacterium *Pseudomonas aureofaciens.* The composition is obtained in the following steps: biomass pyrolysis to obtain biochar, impregnation with humic acid or algae extract, and biotinisation of the biochar with a compost agent comprising said fungi and bacteria. Biochar is listed only as biochar obtained by pyrolysis of biomass, so the phosphorus content in such a biochar is not obvious. In general, the phosphorus content of biochar obtained by pyrolysis of plant biomass is low and it is necessary to supplement it.

Further publications by Yang et al., 2020, titled "Effects of biochar addition to the abundance, speciation, availability and leaching loss of soil phosphorous" and by Fasusi et al., 2021, titled "Agricultural sustainability: Microbial biofertilizers in rhizosphere management" also relate to biochar, phosphorous uptake and microbial biofertilisers.

In the prior art, there is therefore a need to provide a fertiliser based on a biotised product obtained from sewage sludge pyrolysis, which allows the use of all available macronutrients (phosphorus, potassium, nitrogen) by plants.

### Summary of the invention

The object of the invention is to provide a fertiliser composition based on a biotised product obtained by sewage sludge pyrolysis, which provides plants with all the necessary macronutrients (phosphorus, nitrogen, potassium) without the need for supplementation with inorganic fertilisers, and which, in particular, increases the dry weight of maize.

Said objective is achieved by a fertiliser composition comprising a product obtained at least partially by sewage sludge pyrolysis, phosphate solubilising bacteria *Pseudomonas putida* and *Pseudomonas fluorescens,* spores of arbuscular mycorrhizal fungi *Glomus deserticola, Glomus intraradices* and *Glomus mosseae,* and at least one fertiliser component selected from the group consisting of vermicompost extract, humic acids, compost extract, plant or animal manure extract, freshwater or marine algae extract or yeast extract. The increase in the dry weight of maize is documented in Table 3 of Examples.

The fertiliser composition can further comprise spores or mycelium of at least one fungal species selected from the group consisting of endomycorrhizal fungi, arbuscular mycorrhizal fungi, ectomycorrhizal fungi, ericoid mycorrhizal fungi and mycoparasitic fungi.

The mycoparasitic fungus is preferably *Trichoderma spp.,* more preferably *Trichoderma harzianum.* The fertilising component is preferably a vermicompost extract and/or a freshwater or marine algae extract.

Said composition may further comprise at least one species of plant growth promoting bacteria selected from the group consisting of the genera *Bacillus* and *Burkholderia* and/or at least one species of nitrogen fixing bacteria selected from the group consisting of the genera *Rhizobium, Azotobacter* and *Azospirillum.* The plant growth promoting bacteria are preferably *Bacillus megatherium, Bacillus subtilis, Bacillus licheniformis, Bacillus thuringiensis, Bacillus velezenzis, Burkholderia cepacia* and/or *Burkholderia vietnamiensis.* A particularly preferred embodiment is *Bacillus megatherium.* Preferably, the nitrogen fixing bacterium is *Rhizobium leguminosarum, Rhizobium meliloti, Rhizobium huakuii, Rhizobium loti, Azotobacter chroococcum, Azospirillum lipoferum* and/or *Azospirillum brasilense.*

Preferably, said composition may be in granular form, which is itself formed by sewage sludge pyrolysis without the need for a granulation step or the addition of binders.

Preferably, said composition may comprise a product obtained at least partially by sewage sludge pyrolysis, *Pseudomonas putida, Pseudomonas fluorescens, Bacillus megatherium, Burkholderia spp, Azotobacter spp., Azospirillum spp.,* spores of the arbuscular mycorrhizal fungi *Glomus deserticola, Glomus intraradices* and *Glomus mosseae,* and spores of the mycoparasitic fungus *Trichoderma harzianum.*

The product is at least partially obtained by sewage sludge pyrolysis, e. g. medium temperature pyrolysis at a temperature of 630 to 670 °C.

The underlying idea of the fertiliser composition according to the present invention is that it provides (in addition to other nutrients and micronutrients) phosphorus, nitrogen and potassium of biological origin to plants without the need for supplementation with synthetic fertilisers. The high phosphate content of the sewage sludge is made available in a form that is usable by plants by phosphate solubilising bacteria *Pseudomonas putida* and *Pseudomonas fluorescens.* The plant growth promoting bacteria of the genus *Bacillus* and/or *Burkholderia,* preferably *Bacillus megatherium, Bacillus subtilis, Bacillus licheniformis, Bacillus thuringiensis, Bacillus velezenzis, Burkholderia cepacia* and/or *Burkholderia vietnamiensis,* synthesize the growth phytohormone auxin. Airborne nitrogen fixing bacteria of the genera *Rhizobium, Azotobacter* and/or *Azospirillum* make nitrogen available in the soil in a form that can be used by plants.

Spores or mycelium of mycorrhizal and/or mycoparasitic fungi generally contribute to better growth and yield, increased tolerance to drought and nutrient deficiencies, higher resistance to negative environmental influences (high salinity, soil contamination) and plant resistance to pathogens.

The spores or mycelium of arbuscular mycorrhizal fungi, in particular *Glomus deserticola, Glomus intraradices* and *Glomus mosseae,* form an extensive network of fungal structures (hyphae, vesicles, arbuscules) in the cells of the root cortex after penetrating through the rhizodermis and then outside the root, the so-called arbuscules. The mycelia are able to transport water and nutrients (P, N, K, Zn, Cu, Mg) into the root of the plant. Mycelial hyphae also produce a specific glycoprotein, glomalin, which increases the stability of soil macroaggregates and reduces soil erosion.

Plants inoculated with spores or mycelium of mycoparasitic fungi, especially *Trichoderma spp.,* e. g. *Trichoderma harzianum,* show higher nutrient uptake, increased growth, increased root hair formation and higher resistance to fungal pathogens on roots.

The vermicompost extract as a fertilising component supplies the fertiliser with potassium of biological origin and is also advantageously used in cooling the pyrolysed product from the pyrolysis reactor. The freshwater or marine algae extract has a similar effect.

The above-described composition increases soil fertility, increases soil water retention, improves regeneration of poor soils, improves the use of other fertilisers (retains and slowly releases them), and thus reduces the penetration of nutrients into groundwater. Additionally, by adding it to the compost, the temperature of the compost is raised, water retention is increased, and the pH of the compost is raised. The recommended rate is 1 to 6 t dry matter/ha of soil (e. g. 1 or 2 or 5 t dry matter/ha), preferably the composition is mixed into a water suspension or into a suspension with a liquid fertiliser of organic or synthetic origin before incorporation into the soil.

The above objective is further achieved by a method of producing said fertiliser composition, comprising the following steps:
a. pyrolysing sewage sludge to form a sewage sludge pyrolysis product, preferably in a granular form (i. e. without the need to add binders, the granulate is formed spontaneously by pyrolysis);
b. cooling of the resulting sewage sludge pyrolysis product with the fertilising component, preferably the vermicompost extract and/or the freshwater or marine algae extract (e. g. an aqueous solution thereof at a dilution of 1:40), and drying the cooled sewage sludge pyrolysis product (e. g. to between 10 and 20 % by weight of residual water content, preferably to a maximum of 15 % by weight);
c. biotising the cooled and dried sewage sludge pyrolysis product in any order, preferably in the order i.-ii.-iii.-iv.-v., with
   i. spores of arbuscular mycorrhizal fungi *Glomus deserticola, Glomus intraradices* and *Glomus mosseae;*
   ii. phosphate solubilising bacteria *Pseudomonas putida* and *Pseudomonas fluorescens* (e. g. 0.1 to 1.0 g of each bacterium at a CFU concentration of 10⁹ per 1 g);
   iii. optionally, spores or mycelia of fungi selected from the group consisting of endomycorrhizal fungi, arbuscular mycorrhizal fungi, ectomycorrhizal fungi and ericoid mycorrhizal fungi;
   iv. optionally, at least one species of plant growth-promoting bacterium, selected from the group consisting of the genera *Bacillus* and *Burkholderia* (e. g. 0.1 to 1.0 g of each bacterium at a concentration of 10⁹ CFU per 1 g) and/or at least one species of nitrogen fixing bacterium, selected from the group consisting of the genera *Rhizobium, Azotobacter* and *Azospirillum* (e. g. 0.1 to 1.0 g of each bacterium at a concentration of 10⁹ CFU per 1 g); and
   v. optionally, spores of mycoparasitic fungi, preferably *Trichoderma* spp., more preferably *Trichoderma harzianum* (e. g. 0.1 to 1.0 g spores at a concentration of no more than 10 CFU⁵ per 1 g);
   to form the biotised, sewage sludge pyrolysis product comprised in said fertiliser composition.

### Brief description of the drawings

The nature of the invention is further explained by examples of its embodiments, which are described using the accompanying drawings, where:

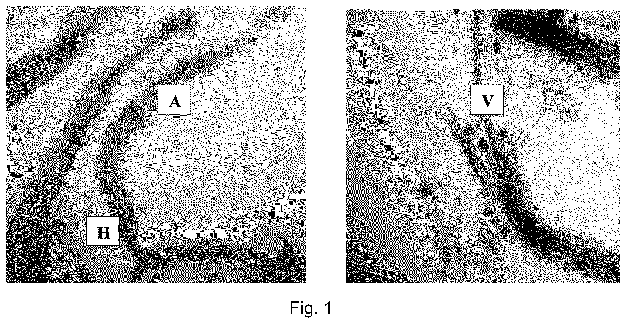

Fig. 1 shows microscopic images of a part of a root colonized by mycelium of the arbuscular mycorrhizal fungi *Glomus deserticola, Glomus intraradices* and *Glomus mosseae* in composition E.

### Examples

An exemplary comparison of the macro- and micronutrient content and some physical parameters of the product obtained from pyrolysis of wood chips and a fertiliser composition comprising the product obtained from sewage sludge pyrolysis (according to claim 1) is summarized in Table 1. The fertiliser composition according to the present invention comprises more N, P, Ca, Fe, Cu and Zn compared to the biomass pyrolysis product. In particular, the higher P content is subsequently exploited by the presence of phosphate solubilising bacteria. The increased content of heavy metals (Cd, Cr, Pb) needs to be further analysed for the presence of these elements in the bioavailable fraction accessible to plants by means of long-term leaching tests.

**Table 1. The content of macro- and micronutrients and some physical parameters of the product obtained by pyrolysis of wood chips (A) and sewage sludge (B).**

| **Parameter** | **Unit** | **A** | **B** |
|---|---|---|---|
| Bulk weight | g/dm³ | 163 | 638 |
| Specific surface, S_{BET} | m²/g | 564 | **13.0** |
| Specific surface of mesopores, Sₘₑₛₒ | m²/g | 258 | **4.00** |
| Specific total pore volume, Vₜₒₜ | mm³_{liq}/g | 443 | **30.0** |
| Specific micropore volume, V_{micro} | mm³_{liq}/g | 162 | **5.00** |
| pH (water, 1:10) | - | 11.2 | **7.70** |
| Conductivity, EC (water 1:10) | mS/cm | 1.40 | 0.79 |
| Ash A^{d} | weight % | 10.6 | 64.3 |
| Volatile flammable substance V^{d} | weight % | 1.30 | 15.4 |
| Heat of combustion Qₛ^{d} | MJ/kg | 28.2 | 10.2 |
| Calorific value Qᵢ^{d} | MJ/kg | 28.0 | 9.90 |
| C content | weight % | 87.0 | **26.6** |
| H content | weight % | 0.91 | 1.10 |
| N content | weight % | 0.36 | **3.00** |
| Total S content | weight % | 0.23 | 0.30 |
| H/C ratio | - | 0.13 | 0.49 |
| C/N ratio | - | 283 | 10.3 |
| P content | g/kg | 0.89 | **47.4** |
| K content | g/kg | 3.90 | 3.60 |
| Ca content | g/kg | 16.4 | **49.0** |
| Mg content | g/kg | 2.85 | 12.2 |
| Na content | g/kg | - | 1.99 |
| Al content | g/kg | - | 27.7 |
| Fe content | g/kg | - | **84.6** |
| As content | mg/kg | <0.50 | 5.02 |
| Cd content | mg/kg | 0.20 | **2.63** |
| Cr content | mg/kg | 18.1 | **136** |
| Cu content | mg/kg | 30.0 | **515** |
| Hg content | mg/kg | 0.02 | 0.009 |
| Ni content | mg/kg | 21.0 | **36.6** |
| Pb content | mg/kg | 8.30 | **73.3** |
| Zn content | mg/kg | 429 | **1620** |

In a first example embodiment, compositions A-E of a fertiliser comprising a product (10 g) obtained by sewage sludge pyrolysis, *Pseudomonas putida* bacterium (10⁶ CFU), *Pseudomonas fluorescens* bacterium (10⁶ CFU), and spores of arbuscular mycorrhizal fungi (0.1 g, abbreviated AMH) *Glomus deserticola, Glomus intraradices,* and *Glomus mosseae* (equal parts) according to Table 2. The above compositions were added to maize *(Zea mays)* plants grown in 1 L pots in a greenhouse in an autoclaved zeolite : sand substrate in a 3:2 ratio. The control was composition F, a synthetic fertiliser NPK Microstar at 5 g/pot. The amount of each component in parentheses is given per 1 L pot, see Table 2. The dry weight (g), the weight of maize female inflorescence (g) and the length of colonized roots due to mycorrhizal inoculum (%) are given in Table 3 and mycorrhizal colonization of roots (arbuscules A, hyphae H and vesicles V) is shown in Figure 1 (coloured in trypan blue).

**Table 2. Composition A-F.**

| **Component** | **A** | **B** | **C** | **D** | **E** | **F** |
|---|---|---|---|---|---|---|
| Product obtained by sewage sludge pyrolysis | 10 g | 10 g | 10 g | 10 g | 10 g | **-** |
| AMH | - | 0.1 g | 0.1 g | 0.1 g | 0.1 g | - |
| P. putida | - | - | 10⁶ CFU | - | 10⁶ CFU | - |
| P. fluorescens | - | - | - | 10⁶ CFU | 10⁶ CFU | - |
| NPK Microstar | - | - | - | - | - | 5 g |

**Table 3. Results of the maize experiment.**

| **Composition** | **Dry weight (g)** | **Weight of female inflorescence (g)** | **Length of colonized roots (%)** |
|---|---|---|---|
| A | 3.1 | 1.3 | 0 |
| B | 3.4 | 1.5 | 15 |
| C | 3.8 | 2.3 | 42 |
| D | 3.8 | 2.4 | 55 |
| E | **5.0** | **2.6** | **58** |
| F | 2.8 | 1.0 | 0 |

From Table 3, the synergistic effect on the dry weight of maize, by the product obtained by sewage sludge pyrolysis, *Pseudomonas putida, Pseudomonas fluorescens,* and spores of the arbuscular mycorrhizal fungi *Glomus deserticola, Glomus intraradices* and *Glomus mosseae* can be seen for composition E, as the contribution of individual *Pseudomonas putida* and *Pseudomonas fluorescens* bacteria is lower in compositions C and D than their combination in composition E. The additive effect can be seen in composition E in the resulting weight of female inflorescence and in the length of colonized roots. *Bacillus megatherium, Burkholderia spp.* and at least one nitrogen fixing bacterium *(Rhizobium, Azotobacter, Azospirillum)* may also be added to the above compositions C-E.

A second example is a method of producing a fertiliser composition, comprising a product obtained by sewage sludge pyrolysis, *Pseudomonas putida, Pseudomonas fluorescens, Bacillus megatherium, Burkholderia spp., Azotobacter spp., Azospirillum spp.,* spores of the arbuscular mycorrhizal fungi *Glomus deserticola, Glomus intraradices* and *Glomus mosseae,* and spores of the mycoparasitic fungus *Trichoderma harzianum.* The sewage sludge is pyrolysed at a temperature of approximately 650 °C to produce a sewage sludge pyrolysis product in a granular form, which is subsequently cooled with an aqueous solution of vermicompost extract (1:40 dilution) and dried to a maximum residual water content of 15 % by weight. The resulting cooled and dried sewage sludge pyrolysis product is biotised with spores of the arbuscular mycorrhizal fungi *Glomus deserticola, Glomus intraradices* and *Glomus mosseae* (the spores are on silicate dust support at a concentration of 5000 spores per 1 g of support). During the rotation of the granulate in the biotisation drum (max. 20 revolutions per min.), the powdered spore concentrate is gradually added (4 g of concentrate per 1 kg of granulate, i. e. 20 000 spores), i. e. the final value of spores per 1 g of granulate is 10, there are approximately 16-20 granules per 1 gram, i. e. the final concentration is at least 1 spore per granule. After biotisation with the spores of arbuscular mycorrhizal fungi (approximately 20 min), a mixture of phosphate solubilising bacteria *Pseudomonas putida* and *Pseudomonas fluorescens (0.5* g from each lyophilized culture with a concentration of 10⁶ to 10⁹ CFU per 1 g, e. g., 10⁹ CFU per 1 g) is biotised in the same rotary drum. The next step is biotisation by mixtures of other bacteria *(Azotobacter, Bacillus, Azospirillum* and others) at the same dosage and concentration as for *Pseudomonas.* Finally, the mycoparasitic fungus *Trichoderma harzianum* is biotised on the surface of the granulate (0.5 g of powder culture at a concentration of CFU 10⁵ per 1 g, while higher concentrations of *Trichoderma harzianum* cannot be recommended due to possible inhibitory reaction and reduced development of mycorrhizal fungi). After addition of all biotising components, it is biotised in the drum at a constant rotation for about 20 min., and then the granulate is transferred to the final packaging (bags, big bags, etc.).

### Industrial applicability

The above-described fertiliser composition can be used in organic farming as a carbon negative fertiliser or soil conditioner.

## Claims

1. A fertiliser composition comprising:
a. a product obtained at least partially by sewage sludge pyrolysis;
b. at least one species of phosphate solubilising bacteria of the genus *Pseudomonas;*
c. spores of arbuscular mycorrhizal fungi *Glomus deserticola, Glomus intraradices* and *Glomus mosseae;* and
d. at least one fertilising component selected from the group consisting of vermicompost extract, humic acids, compost extract, plant or animal manure extract, freshwater or marine algae extract or yeast extract;
**characterised in that** the phosphate solubilising bacteria are *Pseudomonas putida* and *Pseudomonas fluorescens.*

2. The composition according to claim 1, **characterised in that** it further comprises spores or mycelium of at least one fungal species selected from the group consisting of endomycorrhizal fungi, arbuscular mycorrhizal fungi, ectomycorrhizal fungi, ericoid mycorrhizal fungi and mycoparasitic fungi.

3. The composition according to any one of the preceding claims, **characterised in that** the mycoparasitic fungus is *Trichoderma spp.,* preferably *Trichoderma harzianum.*

4. The composition according to any of the preceding claims, **characterised in that** the fertilising component is a vermicompost extract and/or a freshwater or marine algae extract.

5. The composition according to any one of the preceding claims, **characterised in that** it further comprises at least one species of plant growth promoting bacteria selected from the group consisting of the genera *Bacillus* and *Burkholderia* and/or at least one species of nitrogen fixing bacteria selected from the group consisting of the genera *Rhizobium, Azotobacter* and *Azospirillum.*

6. The composition of claim 5, **characterised in that the** plant growth promoting bacterium is *Bacillus megatherium.*

7. The composition according to any one of the preceding claims, **characterised in that** it is in granular form.

8. The composition according to any one of the preceding claims, **characterised in that** it comprises a product obtained at least partially by sewage sludge pyrolysis, *Pseudomonas putida, Pseudomonas fluorescens, Bacillus megatherium, Burkholderia spp., Azotobacter spp., Azospirillum spp.,* spores of arbuscular mycorrhizal fungi *Glomus deserticola, Glomus intraradices* and *Glomus mosseae,* and spores of mycoparasitic fungus *Trichoderma harzianum.*

9. A method of producing the fertiliser composition according to any one of the preceding claims, **characterised in that** it comprises the following steps:
a. pyrolysing sewage sludge to form a sewage sludge pyrolysis product, preferably in a granular form;
b. cooling the resulting sewage sludge pyrolysis product with the fertilising component, preferably the vermicompost extract and/or the freshwater or marine algae extract, and drying the cooled sewage sludge pyrolysis product;
c. biotising of the cooled and dried sewage sludge pyrolysis product in any order, preferably in the order of i.-ii., with
i. spores of arbuscular mycorrhizal fungi *Glomus deserticola, Glomus intraradices* and *Glomus mosseae;* and
ii. phosphate solubilising bacteria *Pseudomonas putida* and *Pseudomonas fluorescens;*
to form a biotised, sewage sludge pyrolysis product comprised in the fertiliser composition according to any one of the preceding claims.

10. The method according to claim 9, **characterised in that** step c. of claim 9 also comprises biotising of the cooled and dried sewage sludge pyrolysis product in any order, preferably in the order of i.-ii.-iii.-iv.-v., with
iii. spores or mycelia of fungi selected from the group consisting of endomycorrhizal fungi, arbuscular mycorrhizal fungi, ectomycorrhizal fungi and ericoid mycorrhizal fungi;
iv. at least one species of plant growth-promoting bacterium, selected from the group consisting of the genera *Bacillus* and *Burkholderia,* and/or at least one species of nitrogen fixing bacterium, selected from the group consisting of the genera *Rhizobium, Azotobacter* and *Azospirillum;* and
v. spores of mycoparasitic fungi, preferably *Trichoderma spp.,* more preferably *Trichoderma harzianum;*
to form a biotised, sewage sludge pyrolysis product comprised in the fertiliser composition according to any one of claims 5 to 8.

## Patentansprüche

1. Eine Düngemittelzusammensetzung, umfassend:
a. ein Produkt, das zumindest teilweise durch Klärschlammpyrolyse erhalten wird;
b. mindestens eine Art von Phosphat-solubilisierenden Bakterien der Gattung *Pseudomonas;*
c. Sporen von arbusculären Mykorrhizapilzen *Glomus deserticola, Glomus intrarces* und *Glomus mossae;* und
d. mindestens eine Düngemittelkomponente ausgewählt aus der Gruppe bestehend aus Wurmkompostierungsextrakt, Huminsäuren, Kompostextrakt, Pflanzen- oder Tiergülleextrakt, Frischwasser- oder Meeresalgenextrakt oder Hefeextrakt;
**dadurch gekennzeichnet, dass** die Phosphat-solubilisierenden Bakterien *Pseudomonas putida* und *Pseudomonas fluorescens* sind.

2. Die Zusammensetzung nach Anspruch 1, **dadurch gekennzeichnet, dass** sie ferner Sporen oder Myzelien von mindestens einer Pilzart umfasst, die aus der Gruppe ausgewählt ist, die aus Endomycorrhizapilzen, arbusculären Mykorrhizapilzen, Ektomycorrhizapilzen, Erikoidmykorrhizapilzen und mykoparasitischen Pilzen besteht.

3. Die Zusammensetzung nach einem der vorhergehenden Ansprüche, **dadurch gekennzeichnet, dass** der mykoparasitische Pilz *Trichoderma spp.,* vorzugsweise *Trichoderma harzianum,* ist.

4. Die Zusammensetzung nach einem der vorhergehenden Ansprüche, **dadurch gekennzeichnet, dass** die Düngemittelkomponente ein Wurmkompostierungsextrakt und/oder ein Frischwasser- oder Meeresalgenextrakt ist.

5. Die Zusammensetzung nach einem der vorhergehenden Ansprüche, **dadurch gekennzeichnet, dass** sie ferner mindestens eine Art von Pflanzenwachstumsförderungsbakterien umfasst, die aus der Gruppe ausgewählt sind, die aus den Gattungen *Bacillus* und *Burkholderia* besteht, und/oder mindestens einer Art von Stickstofffixierbakterien umfasst, die aus der Gruppe ausgewählt sind, die aus den Gattungen *Rhizobium, Azotobacter* und *Azospirillum* besteht.

6. Die Zusammensetzung nach Anspruch 5, **dadurch gekennzeichnet, dass** das Pflanzenwachstumsförderungsbakterium *Bacillus megaterium* ist.

7. Die Zusammensetzung nach einem der vorhergehenden Ansprüche, **dadurch gekennzeichnet, dass** sie in Granulatform vorliegt.

8. Die Zusammensetzung nach einem der vorhergehenden Ansprüche, **dadurch gekennzeichnet, dass** sie ein Produkt, das zumindest teilweise durch Klärschlammpyrolyse erhalten wird, *Pseudomonas putida, Pseudomonas fluorescens, Bacillus megaterium, Burkholderia spp., Azotobacter spp., Azospirillum* spp., Sporen von arbusculären Mykorrhizapilzen *Glomus deserticola, Glomus intrarces* und *Glomus mossae,* und Sporen des mykoparasitischen Pilzes *Trichoderma harzianum* umfasst.

9. Ein Verfahren zur Herstellung der Düngemittelzusammensetzung nach einem der vorhergehenden Ansprüche, **dadurch gekennzeichnet, dass** es die folgenden Schritte umfasst :
a. Pyrolysieren von Klärschlamm zu einem Klärschlammpyrolyseprodukt, vorzugsweise in Granulatform;
b. Abkühlen des resultierenden Klärschlammpyrolyseprodukts mit der Düngemittelkomponente, vorzugsweise mit dem Wurmkompostierungsextrakt und/oder dem Frischwasser- oder Meeresalgenextrakt, und Trocknen des gekühlten Klärschlammpyrolyseprodukts;
c. Biotisieren des gekühlten und getrockneten Klärschlammpyrolyseproduktes in beliebiger Reihenfolge, vorzugsweise in der Reihenfolge von i.-ii., mit
i. Sporen von arbusculären Mykorrhizapilzen *Glomus deserticola, Glomus intrarces* und *Glomus mossae;* und
ii. Phosphat-solubilisierende Bakterien *Pseudomonas putida* und *Pseudomonas fluorescens;*
zur Bildung eines biotisierten Klärschlammpyrolyseprodukts, das in der Düngemittelzusammensetzung nach einem der vorhergehenden Ansprüche enthalten ist.

10. Das Verfahren nach Anspruch 9, **dadurch gekennzeichnet, dass** der Schritt c. des Anspruchs 9 auch Biotisieren des gekühlten und getrockneten Klärschlammpyrolyseprodukts in einer beliebigen Reihenfolge umfasst, vorzugsweise in der Reihenfolge von i.-ii.-iii.-iv.-v., mit
iii. Sporen oder Myzelien von Pilzen, ausgewählt aus der Gruppe, die aus Endomycorrhizapilzen, arbusculären Mykorrhizapilzen, Ektomycorrhizapilzen und Erikoidmykorrhizapilzen besteht;
iv. mindestens eine Art von einem Pflanzenwachstumsförderungsbakterium, ausgewählt aus der Gruppe, die aus den Gattungen *Bacillus* und *Burkholderia* besteht, und/oder mindestens eine Art von einem Stickstofffixierbakterium, ausgewählt aus der Gruppe, die aus den Gattungen *Rhizobium, Azotobacter* und *Azospirillum* besteht; und
v. Sporen von mykoparasitären Pilzen, vorzugsweise *Trichoderma spp.,* besonders bevorzugt *Trichoderma harzianum;*
zur Bildung eines biotisierten Klärschlammpyrolyseprodukts, das in der Düngemittelzusammensetzung nach einem der Ansprüche 5 bis 8 enthalten ist.

## Revendications

1. Une composition d'engrais, comprenant :
a. un produit obtenu au moins partiellement par pyrolyse de boues d'épuration ;
b. au moins une espèce de bactéries solubilisatrices du phosphate du genre *Pseudomonas ;*
c. des spores de champignons mycorhiziens arbusculaires *Glomus deserticola, Glomus intraradices* et *Glomus mosseae* ; et
d. au moins un composant fertilisant choisi dans le groupe constitué par l'extrait de vermicompost, les acides humiques, l'extrait de compost, l'extrait de fumier végétal ou animal, l'extrait d'algues fraîches ou marines, ou l'extrait de levure ;
**caractérisée en ce que** les bactéries solubilisatrices du phosphate sont *Pseudomonas putida* et *Pseudomonas fluorescens.*

2. La composition selon la revendication 1, **caractérisée en ce qu'**elle comprend en outre des spores ou du mycélium d'au moins une espèce fongique choisie dans le groupe constitué par les champignons endomycorhiziens, les champignons mycorhiziens arbusculaires, les champignons ectomycorhiziens, les champignons mycorhiziens éricoïdes et les champignons mycoparasitaires.

3. La composition selon l'une quelconque des revendications précédentes, **caractérisée en ce que** le champignon mycoparasitaire est *Trichoderma spp.,* de préférence *Trichoderma harzianum.*

4. La composition selon l'une quelconque des revendications précédentes, **caractérisée en ce que** le composant fertilisant est un extrait de vermicompost et/ou un extrait d'algues fraîches ou marines.

5. La composition selon l'une quelconque des revendications précédentes, **caractérisée en ce qu'**elle comprend en outre au moins une espèce de bactéries favorisant la croissance des plantes choisies dans le groupe constitué par les genres *Bacillus* et *Burkholderia* et/ou au moins une espèce de bactéries fixant l'azote choisies dans le groupe constitué par les genres *Rhizobium, Azotobacter* et *Azospirillum.*

6. La composition selon la revendication 5, **caractérisée en ce que** la bactérie favorisant la croissance des plantes est *Bacillus megatherium.*

7. La composition selon l'une quelconque des revendications précédentes, **caractérisée en ce qu'**elle est sous forme granulaire.

8. La composition selon l'une quelconque des revendications précédentes, **caractérisée en ce qu'**elle comprend un produit obtenu au moins partiellement par pyrolyse de boues d'épuration, *Pseudomonas putida, Pseudomonas fluorescens, Bacillus megatherium, Burkholderia spp., Azotobacter spp., Azospirillum spp.,* des spores de champignons mycorhiziens arbusculaires *Glomus deserticola, Glomus intraradices* et *Glomus mosseae,* et des spores de champignon mycoparasitaire *Trichoderma harzianum.*

9. Un procédé de fabrication de la composition d'engrais selon l'une quelconque des revendications précédentes, **caractérisé en ce qu'il** comprend les étapes suivantes :
a. pyrolyser de boues d'épuration pour former un produit de pyrolyse de boues d'épuration, de préférence sous forme granulaire ;
b. refroidir le produit de pyrolyse de boues d'épuration résultant avec le composant fertilisant, de préférence l'extrait de vermicompost et/ou l'extrait d'algues fraîches ou marines, et sécher le produit de pyrolyse de boues d'épuration refroidi ;
c. biotiser le produit de pyrolyse de boues d'épuration refroidi et séché dans n'importe quel ordre, de préférence de l'ordre de i.-ii., avec
i. des spores de champignons mycorhiziens arbusculaires *Glomus deserticola, Glomus intraradices* et *Glomus mosseae* ; et
ii. des bactéries solubilisatrices du phosphate *Pseudomonas putida* et *Pseudomonas fluorescens ;*
pour former un produit biotisé de pyrolyse de boues d'épuration compris dans la composition d'engrais selon l'une quelconque des revendications précédentes.

10. Le procédé selon la revendication 9, **caractérisé en ce que** l'étape c. de la revendication 9 comprend également la biotisation du produit de pyrolyse de boues d'épuration refroidi et séché dans n'importe quel ordre, de préférence de l'ordre de i.-ii.-iii.-iv.-v., avec
iii. des spores ou du mycélium de champignons choisis dans le groupe constitué par des champignons endomycorhiziens, des champignons mycorhiziens arbusculaires, des champignons ectomycorhiziens et des champignons mycorhiziens éricoïdes ;
iv. au moins une espèce de bactérie favorisant la croissance des plantes, choisie dans le groupe constitué par les genres *Bacillus* et *Burkholderia,* et/ou au moins une espèce de bactérie fixant l'azote, choisie dans le groupe constitué par les genres *Rhizobium, Azotobacter et Azospirillum* ; et
v. des spores de champignons mycoparasitaires, de préférence *Trichoderma spp.,* de préférence *Trichoderma harzianum ;*
pour former un produit biotisé de pyrolyse de boues d'épuration compris dans la composition d'engrais selon l'une quelconque des revendications 5 à 8.
